# EUROPÄISCHE PATENTSCHRIFT

(11) **EP 2 483 058 B1**
(45) Veröffentlichungstag und Bekanntmachung des Hinweises auf die Patenterteilung: **15.07.2015**
(21) Anmeldenummer: 10759879.9
(22) Anmeldetag: 27.09.2010
(51) Int. Cl.: B29C 65/74, B29C 65/08, B65B 51/22, B65B 51/30

(54) **VORRICHTUNG UND VERFAHREN ZUM SCHWEIßEN UND TRENNEN VON PACKSTOFFEN FÜR EINE VERPACKUNG**
DEVICE AND METHOD FOR WELDING AND SEPARATING PACKAGING MATERIALS FOR A PACKAGE
DISPOSITIF ET PROCÉDÉ DE SOUDAGE ET DE SÉPARATION DE MATÉRIAUX D'EMBALLAGE, POUR UN EMBALLAGE

(30) Priorität: 02.10.2009 DE 102009045299
(43) Veröffentlichungstag der Anmeldung: 08.08.2012
(73) Patentinhaber: Robert Bosch GmbH, 70442 Stuttgart (DE)
(72) Erfinder: IPPERS, Juergen, 47929 Grefrath (DE); WIEDUWILT, Ulrich, 73529 Schwaebisch Gmuend (DE)
(86) Internationale Anmeldenummer: PCT/EP2010/064219
(87) Internationale Veröffentlichungsnummer: WO 2011/039131

(56) Entgegenhaltungen:
- WO-A1-2005/102844
- WO-A1-2007/012917
- WO-A1-2008/102250
- WO-A1-2010/081639
- WO-A1-2010/112282
- US-A- 4 517 790

## Beschreibung

### Stand der Technik

Die vorliegende Erfindung betrifft eine Vorrichtung und ein Verfahren zum Schweißen und Trennen von Packstoffen für eine Verpackung mit einer kombinierten Ultraschall-Schweißvorrichtung und -Schneidvorrichtung, welche insbesondere in Schlauchbeutelmaschinen verwendet wird.

Im Stand der Technik sind Schlauchbeutelmaschinen bekannt, welche Süßigkeiten und andere Artikel verpacken. Hierbei wird üblicherweise aus einer Folie über eine Formschulter ein länglich geschlossener Schlauch hergestellt, dessen eines offene Ende mittels einer Ultraschall-Schweißvorrichtung, die eine Sonotrode und einen Amboss umfasst, durch eine Quersiegelnaht versiegelt wird. Der Packstoff wird zwischen der Sonotrode und dem Amboss dabei durch Berühren der beiden Teile verschweißt. Nach dem Befüllen wird der Schlauch über dem Füllbereich dann durch eine weitere Quersiegelnaht zu einem Schlauchbeutel verschlossen. Darüber hinaus sind üblicherweise Schneidvorrichtungen mit einem Messer vorgesehen, um die noch zusammenhängenden Beutel zu trennen. Aufgrund von Berührungen des Messers mit der Sonotrode ergeben sich Abnutzungserscheinungen, so dass die Messer nach einer gewissen Nutzungszeit ausgetauscht werden müssen. Ferner ist z. B. aus der WO 2008/102250 bekannt, dass spezielle Hartmetalleinsätze in den Ultraschallwerkzeugen verwendet werden, um den Verschleiß infolge der Berührung zu reduzieren.

Aus der US 4,517,790 sind bereits eine Vorrichtung und ein Verfahren der Ultraschallsiegelung von Verpackungen bekannt. Die Quernaht einer Schlauchbeutelmaschine wird durch einen sich hebenden und senkenden Amboss erzeugt. Zum Abtrennen der Verpackungen voneinander ist ein Messer vorgesehen, welches in eine Kerbe einer Gegenfläche einläuft.

### Offenbarung der Erfindung

Die erfindungsgemäße Vorrichtung mit den Merkmalen des Anspruchs 1 weist demgegenüber den Vorteil auf, dass sie ein Schweißen und Trennen eines Packstoffs für eine Verpackung, insbesondere eines Schlauchbeutels, ohne einen mechanischen Kontakt zwischen der Sonotrode und einem im Amboss angeordneten Messer ermöglicht. Erfindungsgemäß weist die Vorrichtung hierzu eine Ultraschall-Schweißvorrichtung mit einer Sonotrode und einem Amboss zum Siegeln des Packstoffs auf, wobei die Sonotrode um eine erste Rotationsachse drehbar ist und der Amboss um eine zweite Rotationsachse drehbar ist. Zudem weist die Vorrichtung eine Schneidvorrichtung mit mindestens einem Messer zum Trennen des Packstoffs auf, die im Amboss angeordnet ist. Hierbei ist das mindestens eine Messer derart am Amboss angeordnet, dass ein Mindestabstand zwischen der Sonotrode und einer Schneide des Messers eingehalten wird, sodass der Packstoff ohne eine Berührung zwischen der Sonotrode und dem Messer durchtrennt wird. Daher kann auf zusätzliche Bauteile, wie z. B. die Hartmetalleinsätze bei Vorrichtungen des Standes der Technik, zum Schutz vor einem Verschleiß aufgrund der Berührung der Ultraschallwerkzeuge verzichtet werden. Ferner weist die erfindungsgemäße Vorrichtung eine hohe Standzeit auf.

Erfindungsgemäß ist eine zum Amboss gerichtete Oberfläche der Sonotrode flächenartig und ohne Ausnehmungen gebildet. Diese einfache Formgebung trägt wesentlich zu einer verbesserten Siegelnahtqualität und zu günstigeren Herstellkosten der Sonotrodenelemente bei.

Erfindungsgemäß ist die Sonotrode mit einem flachen Winkel dachförmig ausgebildet. Dadurch können die Rotationsbewegungen der Vorrichtung beim Schweißen und Trennen des Packstoffs auf ein kleines Winkelmaß reduziert und der gesamte Produktionsablauf beschleunigt werden.

Die Unteransprüche zeigen bevorzugte Weiterbildungen der Erfindung.

Gemäß einer bevorzugten Ausgestaltung der Erfindung umfasst die Vorrichtung zudem eine Verstelleinrichtung, welche die Position des Messers im Amboss in Radialrichtung des Ambosses einstellt. Dadurch kann die Messerposition auf einfache Weise auf die Schwingungsamplitude der Sonotrode entsprechend dem zu trennenden Packstoff angepasst werden. Somit werden Umrüstzeiten der Vorrichtung wesentlich reduziert, was zu einer erhöhten Kosteneffizienz der Produktion beiträgt.

Weiterhin bevorzugt weist das Messer eine Zusatzschneide auf, um einen Zusatzschnitt, insbesondere einen Aufreisschlitz im Packstoff auszubilden. Durch die Zusatzschneide kann gleichzeitig mit dem Trennen zweier Verpackungen zudem eine Aufreißhilfe eingebracht werden. Dadurch kann die zur Herstellung einer Verpackung benötigten Arbeitsschritte verringert bzw. die erforderliche Zeitspanne verkürzt werden.

Vorzugsweise steht das Messer nur geringfügig, insbesondere um 5 µm bis 50 µm, vorzugsweise 10 µm bis 20 µm, aus einer der Sonotrode zugewandten Oberfläche des Ambosses vor. Dadurch kann das Messer den Packstoff um dieses Maß an die Sonotrode heranführen, deren hochfrequente Schwingung den Packstoff an der Schneide des Messers ohne eine Anpresskraft zwischen Sonotrode und Amboss durchtrennt.

Vorzugsweise ist das Messer in der Schneidvorrichtung fest gelagert. Dadurch kann ein elastisches Element zwischen dem Messer und dem Amboss zur Schwingungsentkopplung zwischen Sonotrode und Amboss entfallen, was zur weiteren Vereinfachung und Kostenreduzierung der Vorrichtung beiträgt. Zudem werden dadurch der Austausch und die Justierung des Messers vereinfacht.

Weiterhin bevorzugt ist die Schneidvorrichtung zwischen einem ersten Siegelbereich und einem zweiten Siegelbereich des Ambosses angeordnet. Hierdurch wird ein besonders kompakter Aufbau der Vorrichtung erreicht.

Weiterhin betrifft die Erfindung ein Verfahren zum Schweißen und Trennen eines Packstoffs. Hierbei wird ein zuverlässiges Siegeln und kontaktloses und verschleißfreies Trennen des Packstoffs erfindungsgemäß dadurch erreicht, dass in einem ersten Verfahrensschritt der Packstoff zwischen einer Sonotrode und einem Amboss einer Ultraschall-Schweißvorrichtung positioniert und eine Fußnaht einer vorhergehenden Packung gesiegelt wird. Anschließend wird der Packstoff zwischen der vorhergehenden Packung und einer nachfolgenden

Packung durchtrennt, wobei jeweils eine Drehung in einer Vorschubrichtung des Packstoffs sowohl von der Sonotrode um eine erste Rotationsachse als auch dem Amboss um eine zweite Rotationsachse ausgeführt wird. Dabei berührt ein aus einer der Sonotrode zugewandten Oberfläche des Ambosses vorstehendes Messer einer Schneidvorrichtung den Packstoff und führt diesen in Richtung zur Sonotrode. Die Sonotrode versetzt den Packstoff in Schwingung, so dass der Packstoff vom Messer durchtrennt wird. Dabei wird in jeder Position der Sonotrode und des Ambosses ein Mindestabstand zwischen dem Messer und der Sonotrode eingehalten, so dass keine Berührung zwischen der Sonotrode und dem Messer erfolgt. In einem abschließenden Verfahrensschritt wird eine Kopfnaht der nachfolgenden Packung gesiegelt.

Weiterhin bevorzugt ist eine Schneidkraft der Schneidvorrichtung kleiner als eine Siegelkraft der Ultraschall-Schweißvorrichtung. Dies trägt zu einer verbesserten Siegelqualität der Kopf- und Fußnähte der Packungen bei. Ferner ist das Messer vorzugsweise einstellbar, sodass die Größe des Mindestabstands an die Schwingungsamplitude der Sonotrode und entsprechend der Materialstärke und Materialbeschaffenheit des Packsstoffs angepasst und justiert werden kann.

### Kurze Beschreibung der Zeichnung

Nachfolgend wird ein Ausführungsbeispiel der Erfindung unter Bezugnahme auf die begleitende Zeichnung im Detail beschrieben. In der Zeichnung ist:
- Figur 1: eine schematische Schnittdarstellung der erfindungsgemäßen Vorrichtung in einer ersten Stellung,
- Figur 2: eine schematische Schnittdarstellung der Vorrichtung von Figur 1 in einer zweiten Stellung,
- Figur 3: eine schematische Schnittdarstellung der Vorrichtung von Figur 1 in einer dritten Stellung, und
- Figur 4: eine vergrößerte schematische Schnittdarstellung der Siegelwerkzeuge der Vorrichtung von Figur 1.

### Ausführungsform der Erfindung

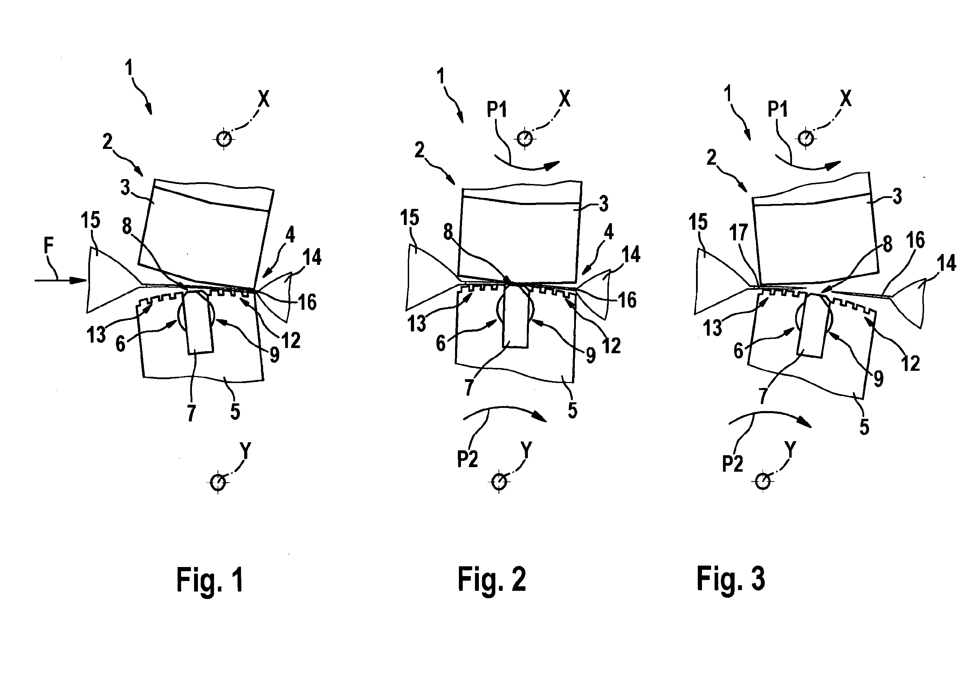

Nachfolgend wird unter Bezugnahme auf die Figuren 1 bis 4 eine Vorrichtung 1 zum Schweißen und Trennen eines Packstoffs für eine Verpackung gemäß einem bevorzugten Ausführungsbeispiel der Erfindung im Detail beschrieben.

Wie Figur 1 ersichtlich ist, umfasst die Vorrichtung 1 zum Schweißen und Trennen eines Packstoffs 4 eine Ultraschall-Schweißvorrichtung 2 mit einer Sonotrode 3 und einem Amboss 5, zwischen denen der Packstoff 4, der eine vorhergehende Packung 14 und eine nachfolgende Packung 15 bildet, in einer mit einem Pfeil gekennzeichneten Förderrichtung F hindurchgeführt wird. Die Sonotrode 3 ist um eine erste Rotationsachse X drehbar und der Amboss 5 um eine zweite Rotationsachse Y drehbar.

Im Innern des Ambosses 5 ist eine Schneidvorrichtung 6 mit einem Messer 7 und einer Verstelleinrichtung 9 angeordnet, mittels der das Messer 7 fixiert sowie in Radialrichtung des Ambosses 5 eingestellt wird. Die Schneidvorrichtung 6 ist zwischen einem ersten Siegelbereich 12 und einem zweiten Siegelbereich 13 des Ambosses 5 angeordnet. In einer alternativen Ausführungsform der erfindungsgemäßen Vorrichtung können auch mehrere Messer bzw. ein Messer 7 mit einer Zusatzschneide im Amboss 5, z. B. zur Herstellung eines Zusatzschnitts, insbesondere eines Aufreisschnitts, angeordnet sein.

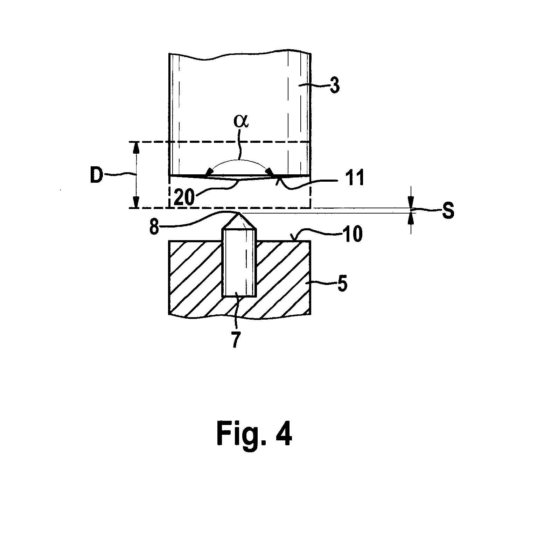

Wie aus der vergrößerten schematischen Schnittdarstellung von Figur 4 ersichtlich, steht das Messer 7 aus einer der Sonotrode 3 zugewandten Oberfläche 10 des Ambosses 5 vor. Dabei wird ein Mindestabstand S zwischen einer Schneide 8 des Messers 7 und einem Dachpunkt 20 der Sonotrode 3 bei einem mit einer gestrichelten Linie symbolisiert dargestellten Maximalausschlag der mit einer Amplitude D schwingenden Sonotrode 3 eingehalten. Dieser Mindestabstand S liegt vorzugsweise in einem Bereich von 5 µm bis 50 µm. Wie aus Figur 4 ferner ersichtlich, ist eine zum Amboss 5 gerichtete Oberfläche 11 der Sonotrode ohne Ausnehmungen und mit einem Winkel α dachförmig mit geringer Neigung ausgebildet. Dieser Winkel liegt vorzugsweise in einem Bereich von 165° bis 175° und ist in Figur 4 beispielhaft mit α = 172° dargestellt.

Das Schweißen und Trennen des Packstoffs 4 einer Verpackung erfolgt in drei Schritten bzw. Stellungen, die in den Figuren 1 bis 3 dargestellt sind. Bei der in Figur 1 dargestellten ersten Stellung der Ultraschall- Schweißvorrichtung 2 wird zuerst eine Fußnaht 16 der vorhergehenden Packung 14 am ersten Siegelbereich 12 gesiegelt, die zwischen der Sonotrode 3 und dem Amboss 5 fixiert ist.

Bei der in Figur 2 dargestellten zweiten Stellung der Ultraschall-Schweißvorrichtung 2 wird der Packstoff 4 zwischen der vorhergehenden Packung 14 und der nachfolgenden Packung 15 durchtrennt. Hierzu führt die Sonotrode 3 eine Drehung um ihre Rotationsachse X in Richtung eines Pfeils P1 und der Amboss 5 eine Drehung um seine Rotationsachse Y in Richtung eines Pfeils P2 gemäß dem in Figur 4 dargestellten Beispiel von jeweils 8° aus. Dadurch liegen der Dachpunkt 20 (siehe Figur 4) der Oberfläche 11 der Sonotrode 3 und die Schneide 8 in radialer Richtung gegenüber. Der in Figur 4 zur besseren Übersichtlichkeit nicht dargestellte Packstoff wird durch die Drehung des Ambosses 5 vom Messer 7 in Richtung zur Sonotrode 3 angehoben bzw. geführt und liegt auf der Schneide 8 auf. Infolge der Schwingungen der Sonotrode 3 wird der Packstoff 4 zwischen dem Dachpunkt 20 und der Schneide 8 des Messers durchtrennt, wobei der Mindestabstand S kleiner oder maximal gleichgroß wie eine Materialstärke des Packstoffs eingestellt ist, sodass kein mechanischer Kontakt zwischen der Sonotrode 3 und dem Messer 7 erfolgt.

Bei der in Figur 3 dargestellten dritten Stellung der Ultraschall-Schweißvorrichtung 2 wird eine Kopfnaht 17 einer nachfolgenden Packung 15 am zweiten Siegelbereich 13 gesiegelt. Hierzu führen die Sonotrode 3 und der Amboss 5 jeweils weitere eine Drehung von 8° um ihre Rotationsachse X bzw. Y in Richtung des Pfeils P1 bzw. P2 aus und siegeln zwischen der Sonotrode 3 und dem Amboss 5 die Kopfnaht 17 der nachfolgenden Packung 15.

Die erfindungsgemäße Vorrichtung kann auf herkömmlichen rotativen Schlauchbeutelmaschinen eingesetzt bzw. nachgerüstet werden und ermöglicht das kontaktfreie und verschleißfreie Trennen des Packstoffs mit minimalen Schneidkräften, die geringer als die Siegelkräfte zum Herstellen der Kopf- und Fußnähte sind. Aufgrund der minimalen Rotationsbewegungen der Ultraschall-Siegelwerkzeuge sind sehr kurze Arbeitsakte und ein entsprechend hoher Produktionsdurchsatz erreichbar.

## Patentansprüche

1. Vorrichtung zum Schweißen und Trennen eines Packstoffs (4) für eine Verpackung, umfassend:
- eine Ultraschall-Schweißvorrichtung (2) mit einer Sonotrode (3) und einem Amboss (5) zum Siegeln des Packstoffs (4), wobei die Sonotrode (3) um eine erste Rotationsachse (X) drehbar ist und der Amboss (5) um eine zweite Rotationsachse (Y) drehbar ist, und
- eine Schneidvorrichtung (6) mit mindestens einem Messer (7) zum Trennen des Packstoffs (4), die im Amboss (5) angeordnet ist,
- wobei das mindestens eine Messer (7) derart am Amboss (5) angeordnet ist, dass ein Mindestabstand (S) zwischen der Sonotrode (3) und einer Schneide (8) des Messers (7) eingehalten wird, sodass der Packstoff (4) ohne eine Berührung zwischen der Sonotrode (3) und dem Messer (7) durchtrennbar ist,
**dadurch gekennzeichnet, dass** eine zum Amboss (5) gerichtete Oberfläche (11) der Sonotrode (3) flächenartig und ohne Ausnehmungen gebildet ist, und/oder dass die Sonotrode (3) mit einem flachen Winkel dachförmig ausgebildet ist.

2. Vorrichtung nach Anspruch 1, ferner umfassend eine Verstelleinrichtung (9), welche eine Position des Messers (7) im Amboss (5) in Radialrichtung des Ambosses (5) einstellt.

3. Vorrichtung nach Anspruch 1 oder 2, **dadurch gekennzeichnet, dass** das Messer (7) eine Zusatzschneide aufweist, um einen Zusatzschnitt, insbesondere einen Aufreißschlitz, im Packstoff (4) auszubilden.

4. Vorrichtung nach einem der vorhergehenden Ansprüche, **dadurch gekennzeichnet, dass** das Messer (7) nur geringfügig, insbesondere um 5 µm bis 50 µm, aus einer der Sonotrode (3) zugewandten Oberfläche (10) des Ambosses (5) vorsteht.

5. Vorrichtung nach einem der vorhergehenden Ansprüche, **dadurch gekennzeichnet, dass** der Mindestabstand (S) zwischen der Sonotrode (3) und der Schneide (8) des Messers (7) in einem Bereich von 5 µm bis 50 µm liegt.

6. Vorrichtung nach einem der vorhergehenden Ansprüche, **dadurch gekennzeichnet, dass** das Messer (7) in der Schneidvorrichtung (6) fest gelagert ist.

7. Vorrichtung nach einem der vorhergehenden Ansprüche, **dadurch gekennzeichnet, dass** die Schneidvorrichtung (6) zwischen einem ersten Siegelbereich (12) und einem zweiten Siegelbereich (13) des Ambosses (5) angeordnet ist.

8. Verfahren zum Schweißen und Trennen eines Packstoffs (4), umfassend die Schritte:
- Positionieren des Packstoffs (4) zwischen einer Sonotrode (3) und einem Amboss (5) einer Ultraschall-Schweißvorrichtung (2) und Siegeln einer Fußnaht (16) einer vorhergehenden Packung (14), wobei eine zum Amboss (5) gerichtete Oberfläche (11) der Sonotrode (3) flächenartig und ohne Ausnehmungen gebildet ist und/oder die Senotrode (3) mit einem flachen Winkel dachförmig ausgebildet ist,
- Trennen des Packstoffs (4) zwischen der vorhergehenden Packung (14) und einer nachfolgenden Packung (15), wobei jeweils eine Drehung in einer Vorschubrichtung (F) des Packstoffs (4) sowohl von der Sonotrode (3) um eine erste Rotationsachse (X) als auch dem Amboss (5) um eine zweite Rotationsachse (Y) ausgeführt wird und ein aus einer der Sonotrode (3) zugewandten Oberfläche (10) des Ambosses (5) vorstehendes Messer (7) einer Schneidvorrichtung (6) den Packstoff (4) berührt und in Richtung zur Sonotrode (3) führt, so dass der Packstoff (4) vom Messer (7) durchtrennt wird, wobei in jeder Position ein Mindestabstand (S) zwischen dem Messer (7) und der Sonotrode (7) eingehalten wird, so dass keine Berührung zwischen der Sonotrode (3) und dem Messer (7) erfolgt, und
- Siegeln einer Kopfnaht (17) einer nachfolgenden Packung (15).

9. Verfahren nach Anspruch 8, **dadurch gekennzeichnet, dass** eine Schneidkraft der Schneidvorrichtung (6) kleiner als eine Siegelkraft der Ultraschall-Schweißvorrichtung (2) ist.

10. Verfahren nach Anspruch 8 oder 9, **dadurch gekennzeichnet, dass** das Messer (7) einstellbar ist.

## Claims

1. Device for welding and separating a packaging material (4) for a package, comprising:
- an ultrasonic welding device (2) having a sonotrode (3) and an anvil (5) for sealing the packaging material (4), wherein the sonotrode (3) is rotatable about a first axis of rotation (X) and the anvil (5) is rotatable about a second axis of rotation (Y), and
- a cutting device (6) having at least one blade (7) for separating the packaging material (4), which cutting device is arranged in the anvil (5),
- wherein the at least one blade (7) is arranged on the anvil (5) in such a way that a minimum distance (S) between the sonotrode (3) and a cutting edge (8) of the blade (7) is maintained, so that the packaging material (4) can be severed without any contact between the sonotrode (3) and the blade (7), **characterized in that** a surface (11) of the sonotrode (3) which is directed toward the anvil (5) is formed in sheet-like configuration and without recesses, and/or **in that** the sonotrode (3) is configured with a shallow angle in the shape of a roof.

2. Device according to Claim 1, further comprising an adjusting device (9), which adjusts a position of the blade (7) in the anvil (5) in the radial direction of the anvil (5).

3. Device according to Claim 1 or 2, **characterized in that** the blade (7) has an auxiliary cutting edge in order to make an additional cut, in particular a tear slit, in the packaging material (4).

4. Device according to one of the preceding claims, **characterized in that** the blade (7) projects only slightly, in particular by 5 µm to 50 µm, from a surface (10) of the anvil (5) which faces toward the sonotrode (3).

5. Device according to one of the preceding claims, **characterized in that** the minimum distance (S) between the sonotrode (3) and the cutting edge (8) of the blade (7) lies within a range from 5 µm to 50 µm.

6. Device according to one of the preceding claims, **characterized in that** the blade (7) is mounted fixedly in the cutting device (6).

7. Device according to one of the preceding claims, **characterized in that** the cutting device (6) is arranged between a first sealing region (12) and a second sealing region (13) of the anvil (5).

8. Method for welding and separating a packaging material (4), comprising the steps:
- positioning of the packaging material (4) between a sonotrode (3) and an anvil (5) of an ultrasonic welding device (2) and sealing of a foot seam (16) of a preceding package (14), wherein a surface (11) of the sonotrode (3) which is directed toward the anvil (5) is formed in sheet-like configuration and without recesses, and/or the sonotrode (3) is configured with a shallow angle in the shape of a roof,
- separation of the packaging material (4) between the preceding package (14) and a following package (15), wherein respectively a rotation in a direction of feed (F) of the packaging material (4) is realized both by the sonotrode (3) about a first axis of rotation (X) and by the anvil (5) about a second axis of rotation (Y), and a blade (7) of a cutting device (6), which blade projects from a surface (10) of the anvil (5) which faces toward the sonotrode (3), touches the packaging material (4) and leads this in the direction of the sonotrode (3), so that the packaging material (4) is severed by the blade (7), wherein in every position a minimum distance (S) between the blade (7) and the sonotrode (3) is maintained, so that no contact is made between the sonotrode (3) and the blade (7), and
- sealing of a head seam (17) of a following package (15).

9. Method according to Claim 8, **characterized in that** a cutting force of the cutting device (6) is less than a sealing force of the ultrasonic welding device (2).

10. Method according to Claim 8 or 9, **characterized in that** the blade (7) is adjustable.

## Revendications

1. Ensemble pour le soudage et la découpe d'un matériau d'emballage (4) prévu pour un emballage, comprenant :
un ensemble (2) de soudage par ultrasons doté d'une sonotrode (3) et d'une enclume (5) servant à sceller le matériau d'emballage (4), la sonotrode (3) pouvant tourner autour d'un premier axe de rotation (X) et l'enclume (5) autour d'un deuxième axe de rotation (Y).
un ensemble de découpe (6) qui présente au moins un couteau (7) qui découpe le matériau d'emballage (4) et associé à l'enclume (5),
le ou les couteaux (7) étant disposés sur l'enclume (5) de telle sorte qu'une distance minimale (S) entre la sonotrode (3) et le tranchant (8) du couteau (7) soit maintenue pour que le matériau d'emballage (4) puisse être découpé sans contact entre la sonotrode (3) et le couteau (7),
**caractérisé en ce que**
une surface (11) de la sonotrode (3) orientée vers l'enclume (5) est plane et ne présente pas de découpe et/ou
**en ce que** la sonotrode (3) est configurée en forme de toit à angle obtus.

2. Ensemble selon la revendication 1, comprenant en outre un dispositif d'ajustement (9) qui établit la position du couteau (7) dans l'enclume (5) dans la direction radiale de l'enclume (5).

3. Ensemble selon les revendications 1 ou 2, **caractérisé en ce que** le couteau (7) présente un tranchant supplémentaire qui forme dans le matériau d'emballage (4) une découpe supplémentaire et en particulier une fente de déchirure.

4. Ensemble selon l'une des revendications précédentes, **caractérisé en ce que** le couteau (7) ne déborde que légèrement et de préférence de 5 µm à 50 µm de la surface (10) de l'enclume (5) tournée vers la sonotrode (3).

5. Ensemble selon l'une des revendications précédentes, **caractérisé en ce que** la distance minimale (S) entre la sonotrode (3) et le tranchant (8) du couteau (7) est de l'ordre de 5 µm à 50 µm.

6. Ensemble selon l'une des revendications précédentes, **caractérisé en ce que** le couteau (7) est monté fixement dans l'ensemble de découpe (6).

7. Ensemble selon l'une des revendications précédentes, **caractérisé en ce que** l'ensemble de découpe (6) est disposé entre une première zone de scellement (12) et une deuxième zone de scellement (13) de l'enclume (5).

8. Procédé de soudage et de découpe d'un matériau d'emballage (4), le procédé comportant les étapes qui consistent à :
placer le matériau d'emballage (4) entre une sonotrode (3) et une enclume (5) d'un ensemble (2) de soudage par ultrasons et scellement d'un cordon de pied (16) d'un emballage précédent (14),
une surface (14) de la sonotrode (3) étant orientée vers l'enclume (5) et étant plane et sans découpe et/ou la sonotrode (3) étant configurée en forme de toit à angle obtus,
découper le matériau d'emballage (4) entre l'emballage précédent (14) et un emballage suivant (15), une rotation de la sonotrode (3) autour d'un premier axe de rotation (X) et de l'enclume (5) autour d'un deuxième axe de rotation (Y) étant réalisée dans une direction d'avancement (F) du matériau d'emballage (4) et un couteau (7) d'un ensemble de découpe (6) débordant hors d'une surface (10) de l'enclume (5) tournée vers la sonotrode (3) touchant le matériau d'emballage (4) et avançant en direction de la sonotrode (3) de telle sorte que le matériau d'emballage (4) soit découpé par le couteau (7), une distance minimale (S) étant maintenue entre le couteau (7) et la sonotrode (3) dans chaque position de telle sorte qu'aucun contact n'ait lieu entre la sonotrode (3) et le couteau (7) et
sceller un cordon de tête (17) d'un emballage (15) suivant.

9. Procédé selon la revendication 8, **caractérisé en ce que** la force de coupe de l'ensemble de coupe (6) est inférieure à la force de scellement de l'ensemble (2) de soudage par ultrasons.

10. Procédé selon les revendications 8 ou 9, **caractérisé en ce que** le couteau (7) est ajustable.
